# EUROPEAN PATENT APPLICATION

(11) **EP 1 813 888 A2**
(43) Date of publication of application: **01.08.2007**
(21) Application number: 06007524.9
(22) Date of filing: 10.04.2006
(51) Int. Cl.: F25B 13/00, F24F 13/22

(54) **Heat pump type air conditioner**

(30) Priority: 25.01.2006 KR 20060007718
(71) Applicant: Samsung Electronics Co., Ltd., Suwon-si, Gyeonggi-Do (KR)
(72) Inventor: Kim, Seung Chul, Yeongtong-Gu Suwon-Si Gyeonggi-Do (KR); Jung, Gyoo Ha, Suwon-Si Gyeonggi-Do (KR)
(74) Representative: Grünecker, Kinkeldey, Stockmair & Schwanhäusser Anwaltssozietät

(57) **Abstract**

A heat pump type air conditioner capable of removing condensate water that is gathered on the surface of an indoor heat exchanger via a cooling operation mode. For this, the heat pump type air conditioner operates a part of the indoor heat exchanger as a condenser, so as to effectively evaporate and remove the condensate water by use of a high-temperature refrigerant of a heating cycle. With this arrangement, high-efficiency and rapid evaporation of condensate water can be accomplished with low costs. Also, an antibacterial effect of preventing the propagation of mold and bacteria that are unpleasant for a user can be prevented, resulting in optimal air conditioning. The heat pump type air conditioner comprises a control device, which performs a cooling operation mode in which the indoor heat exchanger of the refrigerant cycle is used as an evaporator, a heating operation mode in which the indoor heat exchanger is used as a condenser, and a condensate water evaporating operation mode in which a part of the indoor heat exchanger is used as an evaporator, and the remaining part of the indoor heat exchanger is used as a heating source to evaporate the condensate water gathered on the surface of the indoor heat exchanger via a cooling operation

## Description

### CROSS-REFERENCE TO RELATED APPLICATION

This application claims the benefit of Korean Patent Application No. 2006-0007718, filed on January 25, 2006 in the Korean Intellectual Property Office, the disclosure of which is incorporated herein by reference.

### BACKGROUND OF THE INVENTION

### 1. Field of the Invention

The present invention relates to a heat pump type air conditioner, and, more particularly, to a heat pump type air conditioner capable of removing condensate water gathered on the surface of an indoor heat exchanger that performs a heat exchange with indoor air.

### 2. Description of the Related Art

In general, a heat pump type air conditioner is a device configured to perform a cooling operation in summer and a heating operation in winter by switching the circulation direction of a refrigerant in a refrigeration cycle.

Considering the general configuration of the heat pump type air conditioner, it comprises: a compressor to compress a gaseous refrigerant; an indoor heat exchanger to perform a heat exchange with indoor air; an expansion valve to decompress the refrigerant; an outdoor heat exchanger to perform a heat exchange with outdoor air; an accumulator to filter out a liquid refrigerant from the refrigerant prior to being introduced into the compressor; and a 4-way valve to switch a cooling operation mode to a heating operation mode, or vice versa. The above enumerated elements are connected to one another in sequence by use of refrigerant pipes, to form a single closed circuit.

When the heat pump type air conditioner having the above described configuration performs a cooling operation mode, the 4-way valve is switched to introduce a refrigerant, discharged from the compressor, into the outdoor heat exchanger, such that the refrigerant is condensed in the outdoor heat exchanger. Then, after being decompressed by the expansion valve, the condensed refrigerant is evaporated in the indoor heat exchanger to thereby take heat from indoor air, enabling the implementation of a cooling operation. After that, the refrigerant, discharged from the indoor heat exchanger, is guided to the accumulator by passing through the 4-way valve. Thereby, after a liquid refrigerant is filtered out from the refrigerant, the remaining refrigerant is again introduced into the compressor to be compressed therein.

In performing the cooling operation mode, the indoor heat exchanger inevitably forms condensate water on the surface thereof. Accordingly, if the cooling operation mode is completed after formation of the condensate water, the condensate water falls down to a lower end of the indoor heat exchanger, and tends to be gathered on pins of the indoor heat exchanger for a long time, rather than being evaporated. Disadvantageously, the gathered condensate water may bring about the propagation of bacteria that is a cause of respiratory illness. For this reason, if the cooling operation is repeatedly performed without removing the condensate water gathered on the pins of the indoor heat exchanger, the indoor heat exchanger pins are inevitably exposed to continuous bacterial contamination, and thus, may result in secondary contamination of indoor air as the indoor air passes through the indoor heat exchanger pins during the cooling operation.

### SUMMARY OF THE INVENTION

The present invention has been made in order to solve the above problems. It is an aspect of the invention to provide a heat pump type air conditioner which can effectively evaporate and remove condensate water gathered on an indoor heat exchanger during a cooling operation, thereby restricting the generation of mold and bacteria in the indoor heat exchanger.

It is a further aspect of the invention to provide a heat pump type air conditioner which can effectively evaporate and remove condensate water gathered on an indoor heat exchanger, and can minimize unpleasantness of a person staying in a room due to warm air discharged from a refrigerant cycle.

Consistent with one aspect, an exemplary embodiment of the present invention provides a heat pump type air conditioner comprising a control device, wherein the control device performs: a cooling operation mode in which an indoor heat exchanger of a refrigerant cycle is used as an evaporator; a heating operation mode in which the indoor heat exchanger is used as a condenser; and a condensate water evaporating operation mode in which a part of the indoor heat exchanger is used as an evaporator, and the remaining part of the indoor heat exchanger is used as a heating source to evaporate condensate water gathered on the surface of the indoor heat exchanger via a cooling operation.

The indoor heat exchanger may include: a first indoor heat exchanger portion that is used as the evaporator, and a second indoor heat exchanger portion that is used as the heating source, in performing the condensate water evaporating operation mode, and the control device may include: an opening/closing valve to control the flow of refrigerant between the first indoor heat exchanger portion and the second indoor heat exchanger portion; a bypass pipe to connect the first indoor heat exchanger portion and the second indoor heat exchanger portion to each other through a roundabout path; an electric expansion valve on the bypass pipe; and a controller to close the opening/closing valve and open the electric expansion valve, and to supply a refrigerant, discharged from a compressor, to the heating source during the condensate water evaporating operation mode.

During the condensate water evaporating operation mode, the control device may calculate a degree of superheat in the refrigerant cycle based on a temperature of refrigerant to be introduced into the compressor of the refrigerant cycle and a temperature of refrigerant in a pipe of the indoor heat exchanger, and may regulate an opening degree of the electric expansion valve so as to tune the calculated degree of superheat to a preset degree of superheat.

The control device may regulate the electric expansion valve to be opened further if the calculated degree of superheat becomes higher than the preset degree of superheat, and may regulate the electric expansion valve to be closed further if the calculated degree of superheat becomes lower than the preset degree of superheat.

The control device may vary a rotation speed of an outdoor fan, which is provided near an outdoor heat exchanger of the refrigerant cycle, based on the opening degree of the electric expansion valve.

The control device may reduce the rotation speed of the outdoor fan as the electric expansion valve is opened further, and may increase the rotation speed of the outdoor fan as the electric expansion value is closed further.

The control device may perform the condensate water evaporating operation mode when the cooling operation mode is continued beyond a predetermined time or is completed.

The second indoor heat exchanger portion may be located under the first indoor heat exchanger portion.

Consistent with another aspect, an exemplary embodiment of the present invention provides a heat pump type air conditioner having a refrigerant cycle to perform cooling and heating operation modes, comprising: an indoor heat exchanger including a first indoor heat exchanger portion that operates as an evaporator and a second indoor heat exchanger portion that operates as a heating source, in performing the heating operation mode; an opening/closing valve provided at a connection pipe between the first indoor heat exchanger portion and the second indoor heat exchanger portion to open and close a connection path; an electric expansion valve to connect the first indoor heat exchanger portion and the second indoor heat exchanger portion to each other via a roundabout path of the connection pipe; and a control device to switch the cooling operation mode to the heating operation mode, and to close the opening/closing valve and regulate an opening degree of the electric expansion valve in performing a condensate water evaporating operation mode, thereby operating the second indoor heat exchanger portion as the heating source, so as to evaporate and remove condensate water gathered on the second indoor heat exchanger portion.

During the condensate water evaporating operation mode, the control device may calculate a degree of superheat in the refrigerant cycle based on a temperature of refrigerant to be introduced into a compressor of the refrigerant cycle and a temperature of refrigerant in a pipe of the indoor heat exchanger, and may regulate the opening degree of the electric expansion valve so as to tune the calculated degree of superheat to a preset degree of superheat.

The control device may vary a rotation speed of an outdoor fan, which is provided near an outdoor heat exchanger of the refrigerant cycle, based on the opening degree of the electric expansion valve.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a diagram showing a refrigerant cycle of a heat pump type air conditioner consistent with an exemplary embodiment of the present invention;
FIG. 2 is a diagram of the refrigerant cycle of FIG. 1, explaining the flow of a refrigerant in a cooling operation mode;
FIG. 3 is a diagram of the refrigerant cycle of FIG. 1, explaining the flow of refrigerant in a condensate water evaporating operation mode;
FIG. 4 is a control block diagram of a heat pump type air conditioner consistent with an exemplary embodiment of the present invention; and
FIG. 5 is a control flow chart showing a condensate water evaporating operation of the heat pump type air conditioner consistent with the exemplary embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

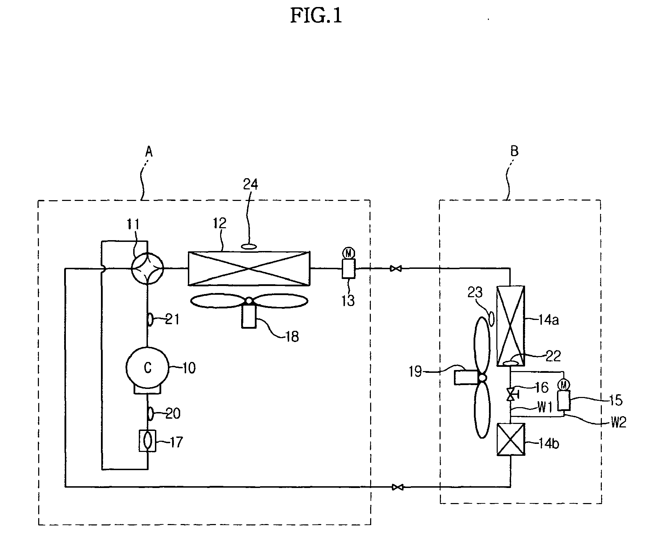

Referring to FIG. 1 illustrating a heat pump type air conditioner consistent with an exemplary embodiment of the present invention, the air conditioner comprises an outdoor unit A and an indoor unit B. The outdoor unit A includes: a compressor 10 to compress a gaseous refrigerant; a 4-way valve 11 to regulate the introduction and discharge directions of the refrigerant to be introduced into or discharged from the compressor 10, so as to switch a cooling operation to a heating operation, or vice versa; an outdoor heat exchanger 12 to perform a heat exchange with outdoor air; an outdoor electric expansion valve 13 to decompress the refrigerant; an accumulator 17 to filter out a liquid refrigerant from the refrigerant prior to being introduced into the compressor 10; an outdoor fan 18; an outdoor temperature sensor 24; an introduction temperature sensor 20; and a discharge temperature sensor 21. The indoor unit B includes: an indoor heat exchanger 14; an indoor electric expansion valve 15; an opening/closing valve 16; an indoor fan 19; an indoor temperature sensor 23; and an indoor heat exchanger pipe temperature sensor 22. Here, the indoor heat exchanger 14 includes a first indoor heat exchanger portion 14a, and a second indoor heat exchanger portion 14b.

An outlet side of the compressor 10 is connected to one side of the outdoor heat exchanger 12 via the 4-way valve 11. The other side of the outdoor heat exchanger 12 is connected to the indoor heat exchanger 14 of the indoor unit B through a refrigerant pipe. The refrigerant pipe between the outdoor heat exchanger 12 and the indoor heat exchanger 14 is provided with the outdoor electric expansion valve 13. An opening degree of the outdoor electric expansion valve 13 is regulated based on an output value of a step motor, for example, of less than 481 (i.e. an output value from 0 to 480). Here, if an output value is zero, it represents that the electric expansion valve is completely closed, whereas, if an output value is 480, it represents that the electric expansion valve is completely opened.

In performing a condensate water evaporating operation mode for evaporating and removing condensate water gathered on the surface of the indoor heat exchanger 14 via a cooling operation, the first and second indoor heat exchanger portions 14a and 14b are individually operable such that the first indoor heat exchanger portion 14a serves as an evaporator, and the second indoor heat exchanger portion 14b serves as a heating source or condenser. The first indoor heat exchanger portion 14a has a larger area than that of the second indoor heat exchanger portion 14b, and is located at a relatively higher location than that of the second indoor heat exchanger portion 14b.

The opening/closing valve 16 is mounted at a connection pipe W1 between the first indoor heat exchanger portion 14a and the second indoor heat exchanger portion 14b, to control the flow of refrigerant between the first indoor heat exchanger portion 14a and the second indoor heat exchanger portion 14b. The opening/closing valve 16 is opened to allow the passage of the refrigerant through the connection pipe W1 in performing a cooling/heating operation mode, whereas is closed to prevent the refrigerant from flowing directly through the connection pipe W1 in performing a condensate water evaporating operation mode.

The indoor electric expansion valve 15 is mounted at a bypass pipe W2, which is connected in parallel to the connection pipe W1 to connect the first indoor heat exchanger portion 14a to the second indoor heat exchanger portion 14b via a roundabout path. In performing a cooling/heating operation mode, the indoor electric expansion valve 15 is completely opened so as not to interrupt the flow of refrigerant. In performing a condensate water evaporating operation mode, an opening degree of the indoor electric expansion valve 15 is regulated to control the flow of refrigerant through the bypass pipe W2. Similar to the outdoor electric expansion valve 13, for example, the opening degree of the indoor electric expansion valve 15 is regulated based on an output value of a step motor, for example, of less than 481 (i.e. an output value from 0 to 480). Here, if an output value is zero, it represents that the electric expansion valve is completely closed, and if an output value is 480, it represents that the electric expansion valve is completely opened.

An outlet side of the indoor heat exchanger 14 is connected to an inlet side of the compressor 10 via a refrigerant pipe via the 4-way valve 11 and the accumulator 17.

The introduction temperature sensor 20 is provided at the refrigerant pipe between an outlet side of the outdoor heat exchanger 12 and the inlet side of the compressor 10 to detect the temperature of refrigerant to be introduced into the compressor 10. The discharge temperature sensor 21 is provided at the refrigerant pipe that connects the outlet side of the compressor 10 to the 4-way valve 11, to detect the temperature of refrigerant discharged from the compressor 10.

The indoor heat exchanger pipe temperature sensor 22 is provided at the first indoor heat exchanger portion 14a, which serves as a cooler, to detect the temperature of refrigerant introduced into the first indoor heat exchanger portion 14a.

As stated above, also, the outdoor unit A is provided with the outdoor temperature sensor 24 to detect the temperature of outdoor air, and the indoor unit B is provided with the indoor temperature sensor 23 to detect the temperature of indoor air.

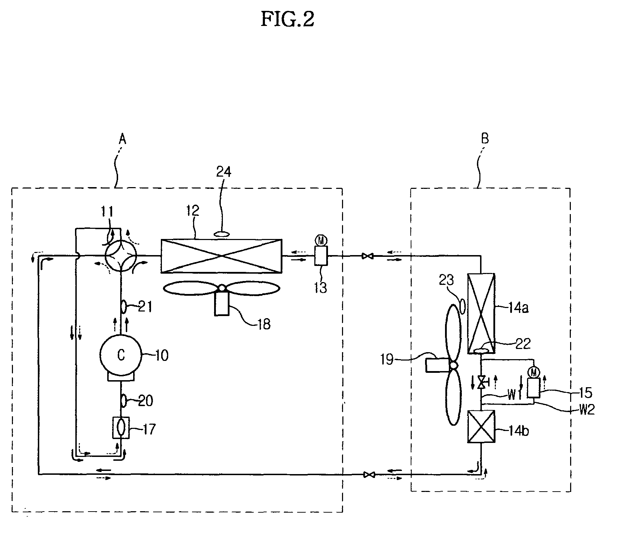

In performing a heating operation mode, the 4-way valve 11 is switched to allow the refrigerant, discharged from the compressor 10, to be introduced into the indoor heat exchanger 14 in a direction as shown by dotted line arrows of FIG. 2. Thereby, the refrigerant acts to supply heat to indoor air as it is condensed in the indoor heat exchanger 14, enabling the implementation of a heating operation. In this case, the opening/closing valve 16 is opened, and also, the indoor electric expansion valve 15 is completely opened. After that, the refrigerant, having passed through the indoor heat exchanger 14, is decompressed by the outdoor expansion valve 13. Finally, the decompressed refrigerant is again introduced into the compressor 10 by passing through the outdoor heat exchanger 12, 4-way valve 11, and accumulator 17 in this sequence.

In performing a cooling operation mode, the 4-way valve 11 is switched to allow the refrigerant, discharged from the compressor 10, to be introduced into the outdoor heat exchanger 12 in a direction as shown by solid line arrows of FIG. 2. The compressed refrigerant is condensed in the outdoor heat exchanger 12, and successively, the condensed refrigerant is decompressed by the outdoor electric expansion valve 13. Thereby, the refrigerant acts to take heat from indoor air as it is evaporated in the indoor heat exchanger 14, enabling the implementation of a cooling operation. After that, the refrigerant, discharged from the indoor heat exchanger 14, is introduced into the accumulator 17 by passing through the 4-way valve 11. While passing through the accumulator 17, a liquid refrigerant is filtered out from the refrigerant, and the remaining refrigerant is again introduced into the compressor 10 to be compressed therein.

Meanwhile, when the cooling operation mode is continued beyond a predetermined time or is completed, condensate water tends to be gathered on the surface of the indoor heat exchanger 14. The gathered condensate water, consequently, falls down around the second indoor heat exchanger portion 14b. To evaporate and remove the gathered condensate water, the present invention further performs a condensate water evaporating operation mode.

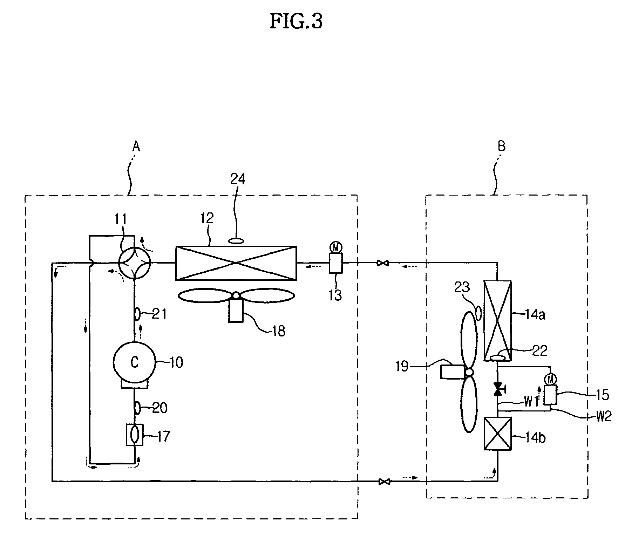

To perform the condensate water evaporating operation mode, first, the cooling operation mode is switched to the heating operation mode. Also, the indoor heat exchanger portions 14a and 14b are adapted to serve as an evaporator and condenser, respectively. For this, the opening/closing valve 16 is closed, and the opening degree of the indoor electric expansion valve 15 is regulated, such that the first indoor heat exchanger portion 14a, which is located at a relatively higher location, operates as an evaporator, and the second indoor heat exchanger portion 14b, which is located at a relatively lower location, operates as a condenser. Thereby, the condensate water, which is gathered around the second indoor heat exchanger portion 14b, is able to be evaporated and removed by use of the relatively high-temperature refrigerant discharged from the compressor 10. More specifically, the 4-way valve 11 is switched to allow the refrigerant, discharged from the compressor 10, to be introduced into the indoor heat exchanger 14 in a direction as shown by dotted line arrows of FIG. 3. Thereby, the high-temperature refrigerant is condensed in the second indoor heat exchanger portion 14b, which operates as a condenser, thereby providing the second indoor heat exchanger portion 14b with heat required to evaporate and remove the condensate water gathered around the second indoor heat exchanger portion 14b. Then, the condensed refrigerant, discharged from the second indoor heat exchanger portion 14b, is introduced into the first indoor heat exchanger portion 14b after being decompressed by the indoor electric expansion valve 15. Thereby, the refrigerant acts to take heat from indoor air as it is evaporated in the first indoor heat exchanger portion 14a, enabling the implementation of a cooling operation. After being discharged from the first indoor heat exchanger portion 14a, the refrigerant is again introduced into the compressor 10 by passing through the outdoor electric expansion valve 13, outdoor heat exchanger 12, 4-way valve 11, and accumulator 17 in this sequence. In this case, the outdoor heat exchanger 12 serves as an evaporator similar to the first indoor heat exchanger portion 14a, and the outdoor electric expansion valve 13 is completely opened so as not to decompress the refrigerant.

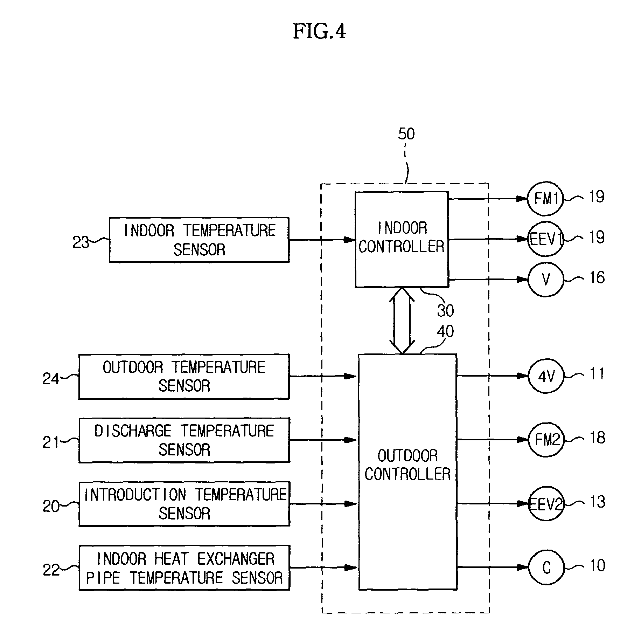

To efficiently perform the above described various operation modes, the heat pump type air conditioner consistent with an exemplary embodiment of the present invention comprises a control device 50 to control the general operation of the air conditioner. As shown in FIG. 4, the control device 50 includes an indoor controller 30 and an outdoor controller 40.

The outdoor controller 40 includes a microcomputer and peripheral circuits, and is adapted to control the general operation of the outdoor unit A. An output side of the outdoor controller 40 is connected to the 4-way valve 11, outdoor electric expansion valve (EEV2) 13, outdoor fan (FM2) 18, and compressor 10. An input side of the outdoor controller 40 is connected to the outdoor temperature sensor 24, introduction temperature sensor 20, discharge temperature sensor 21, and indoor heat exchanger pipe temperature sensor 22.

The indoor controller 30 includes a microcomputer and peripheral circuits, and is adapted to control the general operation of the indoor unit B. An output side of the indoor controller 30 is connected to the indoor fan 19, indoor electric expansion valve (EEV1) 15, and opening/closing valve 16. An input side of the indoor controller 30 is connected to the indoor temperature sensor 23.

If the indoor controller 30 commands to perform the cooling operation mode, the outdoor controller 40 operates to discharge the high-temperature and high-pressure refrigerant from the compressor 10 to the outdoor heat exchanger 12. Under the control of the outdoor controller 40, the discharged refrigerant is circulated through the 4-way valve 11, outdoor heat exchanger 12, outdoor electric expansion valve 13, indoor heat exchanger 14, and 4-way valve 11 in this sequence, prior to being again introduced to the inlet side of compressor 10. Through the circulation of refrigerant as stated above, the cooling of a room can be achieved.

If the indoor controller 30 commands to perform the heating operation mode, the outdoor controller 40 operates to discharge the high-temperature and high-pressure refrigerant from the compressor 10 to the indoor heat exchanger 14. Under the control of the outdoor controller 40, the discharged refrigerant is circulated through the 4-way valve 11, indoor heat exchanger 14, outdoor electric expansion valve 13, outdoor heat exchanger 12, and 4-way valve 11 in this sequence, prior to being again introduced to the inlet side of the compressor 10. Through the circulation of refrigerant as stated above, the heating of a room can be achieved.

Meanwhile, if it is determined that the condensate water evaporating operation mode needs to be performed during the cooling operation mode, the outdoor controller 40 switches the cooling operation mode to the heating operation mode. Simultaneously, the outdoor controller 40 closes the opening/closing valve 16 and regulates the opening degree of the indoor electric expansion valve 15, so as to allow the indoor heat exchanger portions 14a and 14b to serve as an evaporator and condenser, respectively. In operation, the high-temperature and high-pressure refrigerant, discharged from the compressor 10, is first introduced into the second indoor heat exchanger portion 14b that serves as a condenser by passing through the 4-way valve 11. Thereby, the refrigerant acts to provide the second indoor heat exchanger portion 14b with heat as it is condensed in the second indoor heat exchanger portion 14b, so as to evaporate and remove condensate water gathered around the second indoor heat exchanger portion 14b. Then, the condensed refrigerant, discharged from the second indoor heat exchanger portion 14b, is introduced into the first indoor heat exchanger portion 14a that serves as an evaporator, to perform a cooling operation. After that, the refrigerant is again circulated to the inlet side of the compressor 10 by passing through the outdoor electric expansion valve 13, outdoor heat exchanger 12 that serves as an evaporator, and 4-way valve 11 in this sequence. In this way, the condensate water gathered around the second indoor heat exchanger portion 14b can be evaporated and removed by use of the high-temperature and high-pressure refrigerant.

In the condensate water evaporating operation mode, only a part of the indoor heat exchanger 14 is used as a condenser, and the other portion of the indoor heat exchanger 14 is used as an evaporator. Also, the outdoor heat exchanger 12 is used as an evaporator. As will be easily expected, this makes difficult to maintain an appropriate degree of superheat in the refrigerant cycle. As a result, the temperature of refrigerant, to be introduced into the inlet side of the compressor 10, may rise beyond an acceptable level, and thus, may cause the compressor 10 to overload. For this reason, the refrigerant cycle often exhibits deterioration in efficiency, resulting in inefficient evaporation of condensate water around the second indoor heat exchanger portion 14b.

To solve the above problem, the present invention proposes to regulate the opening degree of the indoor electric expansion valve 15 in performing the condensate water evaporating operation mode, so as to maintain the appropriate degree of superheat in the refrigerant cycle. For this, first, the degree of superheat is calculated based on the temperature of refrigerant that is detected via the indoor heat exchanger pipe temperature sensor 22 and the temperature of refrigerant to be introduced into the compressor 10 that is detected via the introduction temperature sensor 20. Thereby, the opening degree of the indoor electric expansion valve 15 is regulated to tune the calculated degree of superheat to a preset degree of superheat. For example, if the degree of superheat in the refrigerant cycle becomes higher than the preset degree of superheat, the indoor electric expansion valve 15 must be regulated to be opened further. Conversely, if the degree of superheat in the refrigerant cycle becomes lower than the preset degree of superheat, the indoor electric expansion valve 15 must be regulated to be closed further. In this way, the degree of superheat can be maintained at an appropriate level. In this case, a rotation speed (RPM) of the outdoor fan 18 is variable based on the opening degree of the indoor electric expansion valve 15. For example, if the opening degree of the indoor electric expansion valve 15 corresponds to an output value of a step motor from 120 to 400, it is preferable that the present rotation speed of the outdoor fan 18 be maintained continuously. If the opening degree of the indoor electric expansion valve 15 is above an output value of 400, it is preferable that the rotation speed of the outdoor fan 18 be reduced to interrupt a heat exchange operation of the outdoor heat exchanger 12. Also, if the opening degree of the indoor electric expansion valve 15 is below an output value of 120, it is preferable that the rotation speed of the outdoor fan 18 be increased to facilitate a heat exchange operation of the outdoor heat exchanger 12.

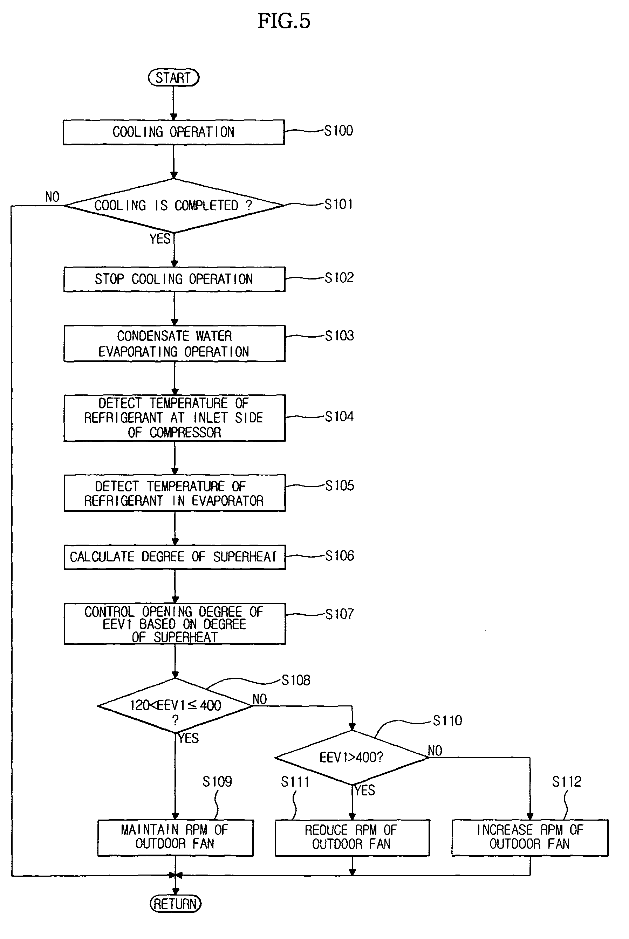

FIG. 5 is a control flow chart showing a condensate water evaporating operation of the heat pump type air conditioner consistent with the exemplary embodiment of the present invention. Referring to FIG. 5, when performing a cooling operation (S100), if the completion of cooling of a room is recognized (S101), the control device 50 stops the cooling operation (S102).

If it is determined that condensate water is gathered on the surface of the indoor heat exchanger 14 via the cooling operation, the control device 50 performs a condensate water evaporating operation to remove the condensate water (S103). In step S103, the 4-way valve 11 is controlled to switch a cooling operation mode to a heating operation mode, the opening/closing valve 16 is closed, and the opening degree of the indoor electric expansion valve 15 is set to an initial value. In this case, the outdoor electric expansion valve 13 is completely opened, and the indoor fan 19 and outdoor fan 18 are rotated at a low speed. Thereby, the high-temperature and high-pressure refrigerant, which is discharged from the compressor 10, is able to be used to evaporate and remove the condensate water while passing through the second indoor heat exchanger portion 14b. To maintain an appropriate degree of superheat in the refrigerant cycle during the condensate water evaporating operation, the temperature of refrigerant to be introduced into the compressor 10 is detected (S104), and the temperature of refrigerant in the indoor heat exchanger portion 14a that serves as an evaporator is detected (S105). Then, the degree of superheat in the refrigerant cycle is calculated by use of the detected temperatures of refrigerant (S106). Based on the calculated degree of superheat, the opening degree of the indoor electric expansion valve (EEV1) 15 is regulated based on the degree of superheat (S107). As stated above, to maintain an appropriate degree of superheat, if the calculated degree of superheat in the refrigerant cycle becomes higher than a preset degree of superheat, the indoor electric expansion valve (EEV1) 15 is regulated to be opened further, whereas, if the degree of superheat in the refrigerant cycle becomes lower than the preset degree of superheat, the indoor electric expansion valve (EEV1) 15 is regulated to be closed further.

Also, the rotation speed (RPM) of the outdoor fan 18 is variably controlled based on the opening degree of the indoor electric expansion valve (EEV1) 15. For example, if the opening degree of the indoor electric expansion valve 15 corresponds to an output value of a step motor from 120 to 400 (S108), the present rotation speed of the outdoor fan 18 is maintained continuously (S109). If the opening degree of the indoor electric expansion valve 15 is above an output value of 400 (S110), the rotation speed of the outdoor fan 18 is reduced to interrupt a heat exchange operation of the outdoor heat exchanger 12 (S111). Also, if the opening degree of the indoor electric expansion valve 15 is below an output value of 120, the rotation speed of the outdoor fan 18 is increased to facilitate a heat exchange operation of the outdoor heat exchanger 12 (S112).

As apparent from the above description, the present invention provides a heat pump type air conditioner which is capable of effectively evaporating and removing condensate water, gathered on the surface of an indoor heat exchanger via a cooling operation, by operating a part of the indoor heat exchanger as a condenser. This enables condensate water to be rapidly evaporated with a high efficiency and low cost. As a result, the air conditioner of the present invention has an antibacterial effect of preventing the propagation of mold and bacteria that can be unpleasant for a user, resulting in optimal air conditioning.

Furthermore, in performing a condensate water evaporating operation, the heat pump type air conditioner consistent with the present invention can regulate the opening degree of an indoor electric expansion valve, and can vary the rotation speed of an outdoor fan in order to maintain an appropriate degree of superheat in a refrigerant cycle. This has the effect of preventing overload of a compressor, and enabling the condensate water gathered on the indoor heat exchanger to be more reliably and effectively removed with a high efficiency.

Although an embodiment of the present invention has been shown and described, it would be appreciated by those skilled in the art that changes may be made in this embodiment without departing from the principles and spirit of the invention, the scope of which is defined in the claims and their equivalents.

## Claims

1. A heat pump type air conditioner comprising a control device,
wherein the control device performs:
a cooling operation mode in which an indoor heat exchanger of a refrigerant cycle is used as an evaporator;
a heating operation mode in which the indoor heat exchanger is used as a condenser; and
a condensate water evaporating operation mode in which a part of the indoor heat exchanger is used as an evaporator, and the remaining part of the indoor heat exchanger is used as a heating source to evaporate condensate water gathered on the surface of the indoor heat exchanger via a cooling operation.

2. The air conditioner according to claim 1,
wherein the indoor heat exchanger includes: a first indoor heat exchanger portion that is used as the evaporator, and a second indoor heat exchanger portion that is used as the heating source, in performing the condensate water evaporating operation mode, and
wherein the control device includes:
an opening/closing valve to control the flow of refrigerant between the first indoor heat exchanger portion and the second indoor heat exchanger portion;
a bypass pipe to connect the first indoor heat exchanger portion and the second indoor heat exchanger portion to each other through a roundabout path;
an electric expansion valve on the bypass pipe; and
a controller to close the opening/closing valve and open the electric expansion valve, and to supply a refrigerant, discharged from a compressor, to the heating source during the condensate water evaporating operation mode.

3. The air conditioner according to claim 2, wherein, during the condensate water evaporating operation mode, the control device calculates a degree of superheat in the refrigerant cycle based on a temperature of refrigerant to be introduced into the compressor of the refrigerant cycle and a temperature of refrigerant in a pipe of the indoor heat exchanger, and regulates an opening degree of the electric expansion valve so as to tune the calculated degree of superheat to a preset degree of superheat.

4. The air conditioner according to claim 3, wherein the control device regulates the electric expansion valve to be opened further if the calculated degree of superheat becomes higher than the preset degree of superheat, and regulates the electric expansion valve to be closed further if the calculated degree of superheat becomes lower than the preset degree of superheat.

5. The air conditioner according to claim 4, wherein the control device varies a rotation speed of an outdoor fan, which is provided near an outdoor heat exchanger of the refrigerant cycle, based on the opening degree of the electric expansion valve.

6. The air conditioner according to claim 5, wherein the control device reduces the rotation speed of the outdoor fan as the electric expansion valve is opened further, and increases the rotation speed of the outdoor fan as the electric expansion value is closed further.

7. The air conditioner according to claim 1, wherein the control device performs the condensate water evaporating operation mode when the cooling operation mode is continued beyond a predetermined time or is completed.

8. The air conditioner according to claim 2, wherein the second indoor heat exchanger portion is located under the first indoor heat exchanger portion.

9. A heat pump type air conditioner having a refrigerant cycle to perform cooling and heating operation modes, comprising:
an indoor heat exchanger including a first indoor heat exchanger portion that operates as an evaporator and a second indoor heat exchanger portion that operates as a heating source, in performing the heating operation mode;
an opening/closing valve provided at a connection pipe between the first indoor heat exchanger portion and the second indoor heat exchanger portion to open and close a connection path;
an electric expansion valve to connect the first indoor heat exchanger portion and the second indoor heat exchanger portion to each other via a roundabout path of the connection pipe; and
a control device to switch the cooling operation mode to the heating operation mode, and to close the opening/closing valve and regulate an opening degree of the electric expansion valve in performing a condensate water evaporating operation mode, thereby operating the second indoor heat exchanger portion as the heating source, so as to evaporate and remove condensate water gathered on the second indoor heat exchanger portion.

10. The air conditioner according to claim 9, wherein, during the condensate water evaporating operation mode, the control device calculates a degree of superheat in the refrigerant cycle based on a temperature of refrigerant to be introduced into a compressor of the refrigerant cycle and a temperature of refrigerant in a pipe of the indoor heat exchanger, and regulates the opening degree of the electric expansion valve so as to tune the calculated degree of superheat to a preset degree of superheat.

11. The air conditioner according to claim 10, wherein the control device varies a rotation speed of an outdoor fan, which is provided near an outdoor heat exchanger of the refrigerant cycle, based on the opening degree of the electric expansion valve.
